(19) Europäisches Patentamt
European Patent Office
Office européen des brevets

(11) **EP 2 188 047 B1**

(12) **EUROPÄISCHE PATENTSCHRIFT**

(45) Veröffentlichungstag und Bekanntmachung des Hinweises auf die Patenterteilung:
**03.10.2012   Patentblatt 2012/40**

(51) Int Cl.:
**B01J 19/24** *(2006.01)*        **C08G 63/78** *(2006.01)*

(21) Anmeldenummer: **08801698.5**

(22) Anmeldetag: **25.08.2008**

(86) Internationale Anmeldenummer:
**PCT/EP2008/006967**

(87) Internationale Veröffentlichungsnummer:
**WO 2009/030397 (12.03.2009 Gazette 2009/11)**

(54) **POLYMERISATIONSREAKTOR, POLYMERISATIONSVORRICHTUNG, VERFAHREN ZUR HERSTELLUNG VON BIOABBAUBAREM POLYESTER SOWIE VERWENDUNGEN**

POLYMERISATION REACTOR, POLYMERISATION DEVICE, METHOD FOR PRODUCING BIO-DEGREADEABLE POLYESTER AND USES

RÉACTEUR DE POLYMÉRISATION, DISPOSITIF DE POLYMÉRISATION, PROCÉDÉ POUR PRODUIRE UN POLYESTER BIODÉGRADABLE ET UTILISATIONS CORRESPONDANTES

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **03.09.2007   EP 07017235**

(43) Veröffentlichungstag der Anmeldung:
**26.05.2010   Patentblatt 2010/21**

(73) Patentinhaber: **Uhde Inventa-Fischer GmbH**
**13509 Berlin (DE)**

(72) Erfinder:
• **HAGEN, Rainer**
 **13465 Berlin (DE)**
• **MÜHLBAUER, Udo**
 **10119 Berlin (DE)**

(74) Vertreter: **Pfenning, Meinig & Partner GbR**
**Patent- und Rechtsanwälte**
**Theresienhöhe 13**
**80339 München (DE)**

(56) Entgegenhaltungen:
**EP-A- 0 087 817     DE-B- 1 136 310**
**US-A- 4 354 020     US-A- 5 484 882**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Vorliegende Erfindung betrifft ein Verfahren zur Herstellung von Polylactid.

Aus der US 5,484,882 ist ein Polymerisationsreaktor zur Hersteller von Copolyester aus cyclischen Estern in Kombinationen mit Lactonen bekannt, der einen Rührkessel sowie einen statischen Mischer umfasst. Es ist bekannt, dass die in dieser Patentschrift beschriebenen Copolymere bei gleicher Temperatur eine wesentlich niedrigere Schmelzviskosität aufweisen als ein Homopolymer aus nur einer der beiden dort genannten Komponenten. Wird also beabsichtigt, ein Homopolymer, insbesondere Polylactid, herzustellen, hat der in der US 5,484,882 beschriebene Polymerisationsreaktor, der als Hauptpolymerisationsstufe einen statischen Mischer aufweist, Nachteile, da die wesentlich höheren Schmelzviskositäten von beispielsweise Polylactid zu 200 bar hohem Druckverlust bis hin zu Verstopfungen und/oder Blockierungen eines derartigen statischen Mischers führen. Derartige Verstopfungen bzw. Blockierungen führen des Öfteren zu Produktionsausfällen derartiger Anlagen, die mit kostspieligen Stillstandzeiten bzw. Reinigungen der Polymerisationsvorrichtung verbunden sind.

Der nächstliegende Stand der Technik ist die US 5,484,882. Dort ist die Kombination eines Rührkessels mit einem statischen Mischer genannt. Rohstoff ist jedoch ein cyclischer Ester, kombiniert mit mindestens einem Lacton. Es entsteht also ein Copolymer. Es ist bekannt, dass Copolymere bei gleicher Temperatur eine wesentlich niedrigere Schmelzviskosität haben als ein Homopolymer aus nur einer der beiden Cokomponenten. Bei Copolymeren sind Schmelzeviskositäten von 100 bis 5.600 Pa·s anzutreffen. Homopolymere hingegen können Schmelzeviskositäten bis 25.000 Pa·s besitzen.

Ausgehend von diesen genannten Nachteilen des Standes der Technik ist es somit Aufgabe der vorliegenden Erfindung, ein Verfahren zur Herstellung von Polylactid bereitzustellen, mit dem sich Polylactide in hoher Reinheit herstellen lassen, wobei das Verfahren zuverlässig, d. h. ohne dass die im Stand der Technik genannten Probleme auftreten, durchführbar ist.

Diese Aufgabe wird bezüglich des Verfahrens mit den Merkmalen des Patentanspruchs 1 gelöst. Dabei stellen die abhängigen Ansprüche vorteilhafte Weiterbildungen dar.

Erfindungsgemäß wird somit ein Verfahren zur Herstellung von Polylactid durch Ringöffnungspolymerisation von Dilactid durch die Schritte:

a) Einspeisen von Dilactid in mindestens einen Rührkessel und/oder einen Schlaufenreaktor als erste Polymerisationsstufe und Durchführen einer Vorpolymerisation, sowie

b) Überführen des erhaltenen Vorpolymerisats in mindestens einen Rohrreaktor als zweite Polymerisationsstufe,

wobei der Rohrreaktor nicht mischende Einbauten aufweist, die das Geschwindigkeitsprofil des durchströmenden Fluids über den Querschnitt des Rohrreaktors vergleichmäßigen, und Durchführen einer Polymerisationsreaktion.

Die erfindungsgemäß vorgesehenen strömungsvergleichmäßigenden Einbauten unterscheiden sich von einem statischen Mischer darin, dass sie nicht mischen, d.h. Auftrennung in Teilströme und anschließend axiales und radiales Umschichten der Teilströme. Die erfindungsgemäß vorgesehenen Einbauten üben nun einen Strömungswiderstand aus, der in axialer Richtung gezielt bemessen ist, so dass ein annähernd gleichmäßiges Profil der Strömungsgeschwindigkeit über den Rohrquerschnitt erreicht wird. Dabei werden die Stromfäden nicht umgeschichtet, sondern bleiben annähernd parallel und werden nur gegeneinander beschleunigt oder verzögert. Ein bevorzugtes Kriterium für die Vergleichmäßigung ist, dass am Austritt des Rohrreaktors der Quotient aus minimaler Verweilzeit eines Stromfadens und der mittleren Verweilzeit des Reaktorinhalts nicht kleiner als 0,5 ist.

Unter einem Schlaufenreaktor wird ein Reaktor verstanden, der eine Rückvermischung des Reaktionsgemisches durch Führen in einer Schlaufe ermöglicht, wodurch der Polymerisationsreaktion der Start erleichtert wird.

Prinzipiell eignen sich somit alle Einbauten, die eine Angleichung des Strömungsprofils über den Querschnitt des Rohrreaktors bewerkstelligen. Fluide, die ein Rohr durchströmen, weisen im Normalfall, d. h. ohne Einbauten im Rohr, ein parabelförmiges Geschwindigkeitsprofil über den Querschnitt des Rohres auf (laminares Strömungsprofil). Die Polymerisationsreaktion und der damit verbundene Anstieg der Schmelzeviskosität führen dem gegenüber zu noch stärkerer Verzögerung der Schmelze im wandnahen Bereichen und zu extremer Beschleunigung in achsnahen Bereichen mit "Durchschießen" kaum polymerisierten Materials in der Nähe der Rohrachse. Somit sind die Strömungsgeschwindigkeiten in der Rohrmitte am größten, während die Strömung des Fluids an den wandnahen Bereichen des Rohres durch Reibungskräfte bedingt verlangsamt wird. Ziel der Erfindung ist somit, eine Vereinheitlichung des Strömungsprofils zu bewerkstelligen, d.h. ein Strömungsprofil zu gewährleisten, das möglichst über den gesamten Querschnitt des Rohres vereinheitlicht ist, so dass die Strömungsgeschwindigkeit des Fluids überall im Rohr möglichst gleich groß ist. Dadurch werden eine starke Durchmischung der hochviskosen Polymerschmelze und dabei auftretende große Scherkräfte verhindert, die einerseits die Polymerqualität negativ beeinflussen, zum anderen Verstopfungen des Rohrreaktors verursachen. Als weiterer Vorteil gegenüber statischen Elementen, die eine starke permanente Mischung der Polymerschmelze bedingen, ist zu nennen, dass somit ein geringerer Strömungswiderstand erzielt wird, der sich insbesondere mit steigender Viskosität nachteilig bei Vorrichtungen des Standes der Technik auswirkt. Mit der eingesetzten Vorrichtung ist somit eine leicht durchführbare Polymerisation bis zu sehr hohen mittleren molaren Massen bei gleichzeitig exzellenter Produktqualität möglich.

Vorteilhafterweise werden in dem erfindungsgemäßen Verfahren Einbauten im Rohr eingesetzt, die ausgewählt sind aus der Gruppe bestehend aus perforierten Lochscheiben, konzentrischen Ringspalten, Verdrängungskörpern und/ oder röhrenförmigen Elementen. Die genannten Einbauten verhindern gleichzeitig ein Durchmischen des Fluids, da es durch Mischvorgänge immer wieder zu den aus dem Stand der Technik bekannten Problemen kommt. Dabei sind die Lochscheiben quasi zweidimensional gestaltet, d. h. erstrecken sich über den Rohrquerschnitt, ohne dabei eine nennenswerte axiale Ausdehnung aufzuweisen, und besitzen bevorzugt auf zur Rohrachse konzentrischen Kreislinien angeordnete Löcher mit variablen Durchmessern. Ebenso ist auch die Möglichkeit gegeben, konzentrische Ringspalte als Einbauten zu verwenden. Bei den Ringspalten sind hierbei zweierlei Ausführungsformen denkbar, zum einen eine quasi zweidimensionale Ausführungsform, die in Analogie zu den perforierten Lochscheiben ausgebildet ist, d. h., dass die bezüglich des Rohrreaktors weiter wandseitig angeordneten Ringspalte an Breite zunehmen, zum anderen aber auch die Ausführungsform, dass die Ringspalte dreidimensional ausgebildet sind, d. h. noch eine weitere Dimension in axialer Richtung des Rohrreaktors aufweisen.

Bei den zweidimensionalen Einbauten kann die Angleichung des Strömungsprofils auch durch die Form der Einbauten selbst bedingt sein. Alternativ oder zusätzlich zur Variation der Größe der Löcher bzw. Spalte können die zweidimensionalen Einbauten z.B. in konzentrischer Kegelform geprägt sein, wobei die Spitze des Kegels gegen die Strömungsrichtung des Fluids weist. Unter konzentrischer Kegelform wird dabei verstanden, dass der Kegelspitze sich bezüglich der Fläche des zweidimensionalen Einbauelements mittig angeordnet befindet. Dadurch wird erreicht, dass der am schnellsten strömende Teil des Fluids auf die Kegelspitze auftrifft und über den Kegelmantel zur Seite ausgelenkt wird. Durch die dabei auftretenden Querkräfte, die der axialen Bewegung des Fluids teilweise entgegenwirken, kommt es zu einer Verlangsamung des in der Mitte des Rohrreaktors befindlichen Teil des Fluids und somit zu einer Vereinheitlichung des Geschwindigkeitsprofils.

Als Alternative zu dreidimensionalen Ringspalten sind auch röhrenförmige Elemente denkbar, wobei sich die Röhren, die weiter in der Mitte des Rohrreaktors angeordnet sind, einen geringeren Durchmesser ausweisen als weiter am Rand des Rohrreaktors eingebrachte Röhren. Die Röhrenelemente können dabei in einer dreidimensionalen Ausführungsform der Lochscheiben oder als Bündel einzelner Rohre ausgebildet sein. Gemeinsames Kriterium dabei ist, dass der Rohrdurchmesser mit zunehmender radialer Entfernung von der Mitte zunimmt. Ebenso ist eine Vereinheitlichung des Strömungsprofils des Fluids und somit eine Angleichung der Geschwindigkeit über den gesamten Rohrquerschnitt durch entsprechend angebrachte Verdrängungskörper möglich.

Bei den dreidimensional ausgebildeten Elementen, insbesondere den konzentrischen Ringspalten, Verdrängungskörpern und/oder röhrenförmigen Elementen ist es bevorzugt, wenn sie in Abhängigkeit ihrer radialen Anordnung bezüglich des Querschnittes des Rohrreaktors unterschiedliche lang in axialer Richtung des Rohrreaktors ausgebildet sind. Somit ist eine zusätzliche bzw. alternative Möglichkeit gegeben, die Strömungsgeschwindigkeit des entsprechenden Fluids im Reaktor über den Querschnitt des Reaktors anzugleichen. Das dabei zugrunde liegende Prinzip ist ebenso die Reibung des Fluids an den entsprechenden dreidimensional ausgebildeten Einbauelementen. Dadurch, dass die Einbauten in der Mitte des Reaktors in axialer Ausrichtung eine größere Länge aufweisen, entsteht zwischen dem Fluid und dem jeweiligen Einbauelement eine größere Reibung als an den weiter wandseitig angebrachten Einbauten, die in axialer Richtung des Rohrreaktors kürzer ausgebildet sind. Somit findet eine verstärkte Verlangsamung des Fluids in der Mitte des Rohrreaktors als an Randbezirken statt. Vorteilhaft ist hierbei auch, wenn die axiale Längenverteilung der Einbauelemente mit dem ungebremsten, laminaren Strömungsgeschwindigkeitsprofil korreliert.

Dabei ist auch eine mehrfache Anordnung gleicher oder verschiedener Einbauten in einem Rohrreaktor hintereinander möglich.

Weiterhin ist es ein vorteilhaftes Merkmal des für das erfindungsgemäße Verfahren einsetzbaren Polymerisationsreaktors, wenn durch die Einbauten gewährleistet ist, dass der Quotient aus minimaler Verweilzeit des den Rohrreaktor am schnellsten durchströmenden Teil des Fluids und der mittleren Verweilzeit des gesamten Fluids im Rohrreaktor mindestens 0,5 beträgt.

In einer weiteren vorteilhaften Ausführungsform des Verfahrens kann ein Polymerisationsreaktor eingesetzt werden, der gewährleistet, dass beim Durchströmen des Reaktors durch die zu polymerisierenden Formmassen im Wesentlichen keine radiale Vermischung bzw. Homogenisierung erfahren. Dies kann durch den maximalen Variationskoeffizienten V von 0,8, bevorzugt von 0,5, zum Ausdruck gebracht werden, wobei V gemäß folgender Gleichung definiert ist

$$V = \frac{S}{c_S}$$

Dabei stellt S die Stichprobenvarianz gemäß

$$S = \sqrt{\frac{1}{n-1} \cdot \sum_{i=1}^{n}(c_i - c_S)^2}$$

und $c_i$ die Konzentration einer Indikatorsubstanz einer an einer zufällig gewählten Stelle i der Austrittsfläche des Rohrreaktors entnommenen Stichprobe dar, wobei die Indikatorsubstanz an einer zufällig gewählten Stelle der Eintrittsfläche des Rohrreaktors aufgegeben werden kann, $c_S$ das arithmetische Mittel der Konzentrationen der entnommenen Stichproben gemäß

$$c_S = \frac{1}{n} \sum_{i=1}^{n} c_i$$

ist, sowie $n$ die Anzahl der Stichproben bedeutet.

Zur Ermittlung des Variationskoeffizienten wird somit die Verteilung einer Indikatorsubstanz ermittelt, die an einer beliebigen Stelle der Eintrittsfläche des Rohrreaktors nahezu punktuell der zu polymerisierenden Masse zugesetzt wird. Die Entnahmestellen der Stichproben werden dabei zufällig über die gesamte Fläche der Austrittsöffnung des Reaktors gewählt. Typische Indikatorsubstanzen für Polymere sind z.B. temperaturbeständige Farbstoffe. Sie werden mit hoher Konzentration in einem geeigneten Lösungsmittel mit niedrigem Dampfdruck gelöst und in Form einer Stoßmarkierung (sehr kurze Zeitspanne) am Reaktoreingang in die Polymerschmelze injiziert. Die Menge an injiziertem Farbstoff wird so bemessen, dass die am Reaktorausgang gezogenen Proben eine auswertbare Farbstoffkonzentration haben.

Zur Analyse werden die Proben in einem geeigneten Lösungsmittel gelöst (z.B. Chloroform für PLA) und die Farbstoffkonzentration in einem Photometer bei vom Farbstoff abhängiger Lichtwellenlänge über die Extinktion gemessen.

Durch die oben genannten Einbauten sowie den sich bevorzugt ergebenden Wert der Variationskoeffizienten ist gewährleistet, dass eine radiale Vermischung der in den Reaktor aufgegebenen Substanzen größtenteils unterbleibt. Besonders vorteilhaft ist hierbei, dass durch die gewählte Form der Einbauten im Rohrreaktor Scherkräfte, die normalerweise zur Durchmischung der aufgegebenen Formmassen benutzt werden, nicht auftreten und somit eine deutlich schonendere, das Reaktionsgut weniger mechanisch beanspruchende Polymerisationsreaktion möglich ist. Typische Defekte bei den resultierenden Polymeren, wie beispielsweise Verfärbungen des Produkts durch erhöhte Konzentrationen von Abbauprodukten, können somit fast vollständig unterbunden werden.

Weiter bevorzugt ist es, wenn das Verhältnis

$$\frac{L}{D \cdot \tau}$$

des Rohrreaktors, wobei L die Länge des Rohrreaktors, D den Durchmesser des Rohrreaktors und $\tau$ die Verweilzeit eines Reaktionsgemisches im Rohrreaktor darstellen, kleiner als 30/h, bevorzugt < 20/h, besonders bevorzugt < 10/h ist. Im Gegensatz dazu, wird bei statischen Mischern üblicherweise ein Verhältnis von größer als 30/h gewählt, um die erforderlichen Strömungsgeschwindigkeiten für eine effiziente Quervermischung zu erreichen. Die genannte Bedingung ist ein weiteres Indiz dafür, dass radiale Vermischung im erfindungsgemäßen Rohrreaktor weitestgehend unterbleibt.

Ebenso ist es von Vorteil, wenn die Einbauten konzentrisch bezüglich der Längsachse des Rohrreaktors angeordnet sind.

Insbesondere ist hierbei vorteilhaft, wenn die Einbauten durch einen konzentrischen Spalt von der Reaktorwand getrennt sind, wobei der Spalt bevorzugt zwischen 1% und 10% des Reaktorradius beträgt.

Weiter ist es vorteilhaft, wenn die freie Querschnittsfläche der Einbauten eine radiale Verteilung aufweist. Die radiale Verteilung bedeutet hierbei, dass beispielsweise in der Nähe der Längsachse des Rohrreaktors die Einbauten eine kleinere freie Querschnittsfläche aufweisen, die vom Reaktionsgemisch durchströmt wird, während die freie Querschnittsfläche der Einbauten an der Peripherie, d.h. an radial von der Längsachse des Reaktors weiter entfernten Stellen größere Beträge aufweist.

Unterteilt man die Querschnittsfläche des Rohrreaktors in drei konzentrische Kreisringe mit einer Kreisringbreite von einem Drittel des Radius', so ist es besonders vorteilhaft, wenn der Anteil der freien Querschnittsfläche im inneren Kreisring kleiner als 70 %, im mittleren Kreisring zwischen 10 % und 75 % und im äußeren Kreisring mehr als 20 % beträgt. Im Gegensatz zu statischen Mischern, deren Einbauten in der Regel eine einheitliche Geometrie aufweisen, ist bei dem für das erfindungsgemäße Verfahren einsetzbaren Rohrreaktor nicht nur die freie Querschnittsfläche radial, sondern auch axial variabel. Dieser Aufbau und die Anordnung der Einbauten ist dabei in Lösungsrichtung an die aufgrund der Polymerisationsreaktion stark steigende Viskosität im Rohrreaktor angepasst. Somit wird eine vollständige Homogenisierung des Strömungsprofils erzielt.

Die erste Stufe der Polymerisationsvorrichtung ist ein Reaktor mit Rückvermischung (Rührkessel oder Schlaufenreaktor). Ein Schlaufenreaktor ist die zu einem Ring verbundene Hintereinanderschaltung mehrerer Rohrreaktoren. In dieser Stufe wird ein homogenes Vorpolymer mit einem Umsatzgrad von max. 70% erzeugt. Dabei steigt die Viskosität von wenigen m Pa·s des Monomers auf Werte zwischen 50 und 500 Pa·s des Vorpolymers. Diese Viskosität wird benötigt, um den nötigen Druckaufbau, der für den anschließenden Rohrreaktor notwendig ist, bewerkstelligen zu können. Um sehr hohe Drücke am Einlauf des Rohrreaktors zu vermeiden, ist es bevorzugt, wenn mindestens zwei Rohrreaktoren hintereinander geschaltet sind und zwischen diesen eine Pumpe eingebaut wird. Mit einer derartigen Anordnung können sehr hohe Molekulargewichte und Umsatzgrade erzielt werden.

In einer weiteren vorteilhaften Ausgestaltungsform ist dabei vorgesehen, dass die Wandung des Rohrreaktors und/oder die Einbauten über einen Wärmeträger kühlbar und/oder beheizbar sind. Somit können gezielt die Reaktionsbedingungen, bei denen die jeweilige Polymerisation abläuft, gesteuert werden. Beispielsweise ist es vorteilhaft, bei exothermen Reaktionen den Reaktor bzw. die Einbauten zu kühlen, während bei endothermen Prozessen der Reaktor beheizt werden kann.

Erfindungsgemäß kann eine im Folgenden beschriebene Polymerisationsvorrichtung zur Polymerisation eines Dilactids eingesetzt werden.

Dabei ist es weiter vorteilhaft, wenn dem Reaktor dabei die Reinigungsvorrichtung zur Reinigung des zuvor genannten Dilactids vorgeschaltet ist. Diese Reinigungsvorrichtung kann dabei beispielsweise eine Trennwandkolonne sein.

Bei der Reinigungsvorrichtung ist es ebenso vorteilhaft, wenn der Kopfkondensator als Dephlegmator ausgeführt wird, dem eine zusätzliche Kondensationsvorrichtung zur Kondensation des Dilactids aus den restlichen Brüden nachgeschaltet ist.

Die zuvor genannten Möglichkeiten, bei denen der Polymerisationsreaktor Bestandteil einer Produktionsanlage zur Herstellung von Polylactid ist, gewährleisten somit, dass eine sehr effiziente Herstellung von Polylactid, ausgehend vom Rohprodukt Milchsäure in hoher Reinheit ermöglicht wird.

Dabei ist es insbesondere vorteilhaft, wenn das Verfahren so geführt wird, dass der Quotient aus minimaler Verweilzeit des den Rohrreaktor am schnellsten durchströmenden Teil des Fluids und der mittleren Verweilzeit des gesamten Fluids im Rohrreaktor mindestens 0,5 beträgt.

Insbesondere ist die Verfahrensführung dabei derart gestaltet, dass die Vorpolymerisation im Schritt a) bis zu einem maximalen Umsatz des Dilactids von 5 bis 70 mol-%, bevorzugt 30 bis 60 mol-% durchgeführt wird. Die Bestimmung des Umsatzes erfolgt dabei durch Ermittlung des Monomerengehaltes im Auslauf des Reaktors, z. B. durch Gaschromatographie.

Nach Überführen des derart hergestellten Vorpolymerisats wird die Polymerisationsreaktion im Schritt b) bevorzugt bis zu einer maximalen Schmelzviskosität von 100 Pa·s bis 25.000 Pa·s, vorzugsweise von 500 Pa·s bis 20.000 Pa·s durchgeführt.

Durch eine derart ausgestaltete Polymerisation lassen sich sehr hohe Umsatzraten erzielen. Bevorzugt wird die Polymerisationsreaktion im Schritt b) bis zu einem Umsatz des Dilactids von mindestens 90 mol-%, bevorzugt mindestens 92,5 mol-%, besonders bevorzugt mindestens 95 mol-% durchgeführt.

In einer weiteren vorteilhaften Ausführungsform werden im Anschluss an Schritt b) Stabilisatoren beigemischt.

Weiterhin ist es vorteilhaft, wenn im Anschluss an Schritt b) eine Entmonomerisierung durch Extraktion mit einem Lösungsmittel und/oder durch Vakuumentgasung erfolgt.

Ebenso ist es von Vorteil, wenn dem Dilactid vor Schritt a) und/oder vor Schritt b) Polymerisationskatalysatoren beigemischt werden.

Ebenso eröffnet das erfindungsgemäße Verfahren, dass im Anschluss an Schritt b) mindestens ein Additiv, ausgewählt aus der Gruppe bestehend aus Nukleierungsmitteln, Farbstoffen, Verstärkungsstoffen, Verarbeitungshilfsstoffen, Weichmachern, Modifizierungsmitteln, Füllstoffen und/oder Antioxidantien beigemischt werden können.

Durch das erfindungsgemäße Verfahren ist ebenso die Möglichkeit gegeben, im Anschluss an Schritt b) zu dem hergestellten Polylactid weitere Polymere, beispielsweise mindestens einen weiteren Polyester (z.B. PBS (Polybutylensuccinat)) und/oder einen Polyether (z.B. Polyethylenglykol) zuzumischen und somit Blends herzustellen. Die Menge des jeweiligen zugesetzten Polymers ist über weite Bereiche variabel und wird vom Fachmann je nach den gewünschten Eigenschaften des Produktes eingestellt.

Die vorliegende Erfindung wird anhand der nachfolgend abgebildeten Figuren sowie den Beispielen näher erläutert. Die in den Figuren dargestellten Ausführungsformen sind dabei jedoch lediglich beispielhaft zu verstehen und schränken die Erfindung keinesfalls auf die dort dargestellten Merkmalskombinationen ein.

Dabei zeigen:

Fig. 1 eine Ausgestaltungsform eines für das erfindungsgemäße Verfahren einsetzbaren Polymersationsreaktors, und

Fig. 2 eine schematische Darstellung des Gesamtprozesses der Polymerisation von Lactid, ausgehend von Milchsäure, anhand einer Ausführungsform einer erfindungsgemäßen Polymerisationsvorrichtung.

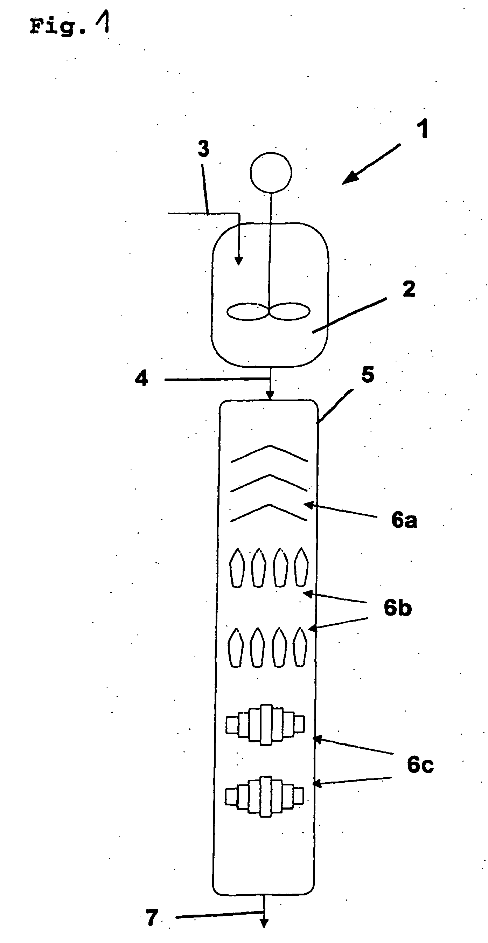

In Fig. 1 ist ein für das erfindungsgemäße Verfahren einsetzbarer Polymerisationsreaktor 1 dargestellt, der dabei einen Rührkessel 2 als erste Polymerisationsstufe sowie einen Rohrreaktor 5 als weitere Polymerisationsstufe umfasst. Dabei wird das Monomer Dilactid über die Rohrleitung 3 in den Rührkessel geleitet und dort bis zu einem Umsatz von ca. 50 - 70 % des Monomeren vorpolymerisiert. Die Bestimmung der Umsatzrate erfolgt dabei durch Ermitteln des Gehaltes an Restmonomer im Auslauf des Rührkessels. Die Bestimmung erfolgt dabei anhand von dem Fachmann geläufigen Methoden, wie beispielsweise chromatographischen Messmethoden. Nach Abschluss der Vorpolymerisation wird der Inhalt des Rührkessels über die Rohrleitung 4 dem Rohrreaktor 5 zugeführt. Im Rohrreaktor 5 findet die Polymerisation bis hin zum fertigen Produkt statt. Um das Strömungsprofil über den Querschnitt des Rohrreaktors 5 zu vereinheitlichen, sind dabei gleiche oder verschiedene Einbauten 6 im Rohrreaktor 5 vorgesehen. Beispielsweise kann es sich hier um perforierte Lochbleche 6a, Verdrängungskörper 6b oder röhrenförmige Elemente 6c handeln. Bei den Einbauten 6b und 6c mit dreidimensionaler Ausdehnung sind diese in axialer Ausrichtung bezüglich des Rohrreaktors 5 so ausgebildet, dass sie eine Vereinheitlichung des Strömungsprofils gewährleisten. Beispielsweise bei den röhrenförmigen Elementen 6c ist ersichtlich, dass hier eine unterschiedlich lange Gestaltung der röhrenförmigen Elemente in axialer Richtung des Rohrreaktors 5 vorgesehen ist. Durch die erhöhten Reibungskräfte des Fluids in der Mitte des Reaktors an den rohrförmigen Elementen 6c ist somit eine Verlangsamung des Fluidflusses in der Mitte gewährleistet. Dies führt zur Vergleichmäßigung des Strömungsprofils. Das fertige Produkt wird nach Abschluss der Polymerisationsreaktion über den Auslass 7 entnommen.

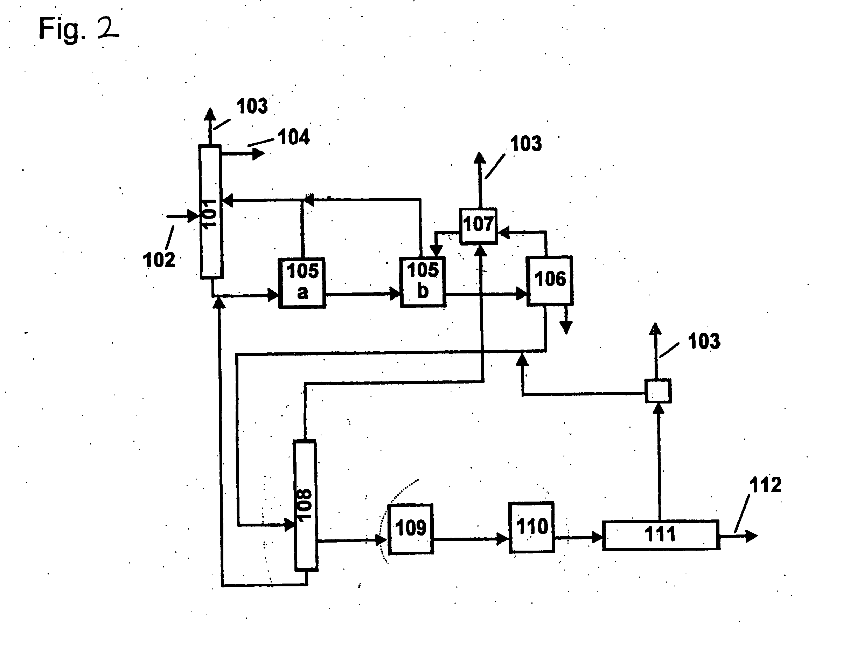

In Fig. 2 ist der kontinuierliche Gesamtprozess der Polylactidherstellung (PLA-Prozess) ausgehend von Milchsäure mit einer für das erfindungsgemäße Verfahren einsetzbaren Polymerisationsvorrichtung 100 dargestellt. Der Prozess untergliedert sich dabei in die folgenden Teilschritte, die mit den in die Polymerisationsvorrichtung 100 integrierten, im Folgenden näher erläuterten, Einzelbestandteilen ausgeführt werden.

### 1. Aufkonzentration von Milchsäure

Das Ausgangsmaterial für den Prozess ist Milchsäure. Dabei muss der Gehalt an Milchsäure höher als 80 Gew.-% sein. Vorzugsweise beträgt dabei die Milchsäurekonzentration mehr als 90 %, weil das Wasser vor der Polymerisation entfernt werden muss. Die Trennung von Wasser und Milchsäure wird dabei in einer Rektifikationssäule 101 vorgenommen. Dabei wird über einen Absaugstutzen 103 Vakuum angelegt, das dampfförmig anfallende Wasser wird kondensiert und über einen weiteren Stutzen 104 kopfseitig entnommen. Die Zuführung der Milchsäure erfolgt dabei kontinuierlich über einen weiteren Stutzen 102. Das Destillat ist reines Wasser, das sumpfseitig anfallende Produkt ist Milchsäure mit einer Konzentration von mehr als 99 Gew.-%.

Neben der Abtrennung von Wasser aus dem Ursprungsmaterial (Milchsäure) dient die Rektifikationssäule 101 ebenso zur Trennung der Dämpfe aus den Präkondensations-Reaktoren 105a und 105b. Die Dampfströme bestehen dabei aus Milchsäure, Lactoylmilchsäure, Dilactid und Wasser. Das Wasser wird kopfseitig abgezogen, Milchsäure und ihre Derivate gehen in den Sumpf der Rektifikationssäule und von dort zusammen mit der aufkonzentrierten Milchsäure in den ersten Präkondensations-Reaktor 105a.

### 2. Präkondensation

Die aufkonzentrierte Milchsäure wird in einer Serie von zwei Reaktoren 105a und 105b durch Polykondensation in ein Präpolymer überführt. Die Polykondensation läuft unter zwei verschiedenen Drücken und Temperaturen ab, um den Reaktionsumsatz zu optimieren. Im ersten Reaktor 105a sind die Konditionen so gewählt, dass die Verdampfung von Milchsäure minimiert ist und gleichzeitig die Entfernung von Wasser erleichtert wird. Im zweiten Schritt der Polykondensation ist die Reaktionsgeschwindigkeit durch eine höhere Temperatur erhöht, gleichzeitig wird der Druck vermindert, um die Wasserkonzentration in der Schmelze weiter zu mindern. Die mittlere Molmasse (Zahlenmittel) des Präpolymers liegt dabei zwischen 500 und 2.000 g/mol.

3. Cyclisierende Depolymerisation

Das Präpolymer steht in chemischem Gleichgewicht mit dem cyclischen Dimer der Milchsäure, dem Dilactid. Durch Einstellung von Druck und Temperatur im Depolymerisationsreaktor 106 ist gewährleistet, dass das Lactid kontinuierlich aus dem Präpolymer gebildet wird und verdampft. Zum Depolymerisationsreaktor 106 gehört ein Kondensator, der die Reaktionsbrüden teilweise kondensiert: Wasser und der größte Anteil an Milchsäure bleiben dabei dampfförmig und werden in der Kondensationsvorrichtung 107 wiederum teilweise kondensiert. Das Kondensat aus dem Depolymerisationsreaktor 106 enthält zuvorderst das Lactid, Lactoylmilchsäure (das lineare Dimer der Milchsäure) und höhere lineare Oligomere.

4. Lactid-Reinigung

Während der Ringöffnungspolymerisation hängt das erreichbare Molekulargewicht und somit bedeutende mechanische Eigenschaften des Polylactids vom Reinheitsgrad des Lactids ab. Die Hydroxyl-Gruppen der als Verunreinigung enthaltenen Milchsäure und Lactoylmilchsäure dienen dabei als Ausgangspunkt der Polymerisation. Je höher die Konzentration der Hydroxyl-Gruppen im Lactid ist, desto geringer fällt das erreichbare Molekulargewicht des Polymers aus. Die Konzentration der Hydroxyl-Gruppen im Rohlactid ist nach der cyclisierenden Depolymerisation zu hoch. Das kondensierte Lactid wird in einer Rektifikationssäule 108 bis zur benötigten Hydroxylgruppenkonzentration aufgereinigt. Das gereinigte Lactid wird der Säule 108 als Seitenstrom entnommen. Das Destillat und das Sumpfprodukt werden dem Prozess an unterschiedlichen Stellen wieder zugeführt. Neben dem Molekulargewicht des Polylactids werden seine Eigenschaften stark durch den D-Gehalt (die Menge an strukturellen Einheiten, die die D-Konfiguration aufweisen) oder im Falle der Polymerisation von D-Lactid durch den L-Gehalt beeinflusst.

5. Ringöffnungspolymerisation

Die Ringöffnungspolymerisation wird in einem erfindungsgemäßen Reaktor unternommen, der aus einer Kombination eines Rührkessels 2 und eines Rohrreaktors 5 gebildet ist. Im ersten Reaktor 109 wird das niedrigviskose Lactid zu PLA polymerisiert mit einer Umsetzungsrate von ca. 50 - 70 %. Katalysator und Additive werden homogen in die Schmelze eingemischt.

Im Rohreaktor 5 wird die Polymerisationsreaktion so lange fortgeführt, bis ein chemisches Gleichgewicht zwischen Polymer und Monomer erreicht wird. Die maximale Umsetzung des Monomers beträgt ca. 95 %. Während der Polymerisation erhöht sich die Viskosität auf ca. 10.000 Pa·s.

6. Entmonomerisierung

Um ein stabiles Polylactid zu erhalten, ist die Monomerkonzentration von ungefähr 5 Gew.-% in der Schmelze zu hoch. Deswegen muss eine Entmonomerisierung durchgeführt werden. Dies wird durch eine Entgasung der Schmelze z.B. in einem Doppelschneckenextruder 111 erreicht. Aufgrund der Tatsache, dass die Ringöffnungspolymerisation eine Gleichgewichtsreaktion ist, wird ein Stabilisator vor der Entmonomerisierung zugegeben, um die Rückbildung des Monomers während und nach der Entgasung zu verhindern.

7. Granulierung und Kristallisation

Anschließend an die Entmonomerisierung wird die Schmelze dem Entmonomerisierungsapparat 111 entnommen und in ein Granulat 112 überführt. Dabei können sowohl Stranggranulation als auch Unterwasser-Heißabschlag-Granulation durchgeführt werden. In beiden Fällen muss das PLA-Granulat vor der Trocknung und der Verpackung kristallisiert werden. Die Kristallisation wird bei erhöhten Temperaturen und unter Rühren durchgeführt.

**Beispiel 1: Strömungssimulation**

Die Strömung in einem Rohrreaktor, in dem Ringöffnungspolymerisation von Dilactid zu Polylactid stattfindet, wird mit einer Software für Strömungssimulation simuliert. Der Zulauf besteht aus einem Vorpolymer, ein Gemisch aus Dilactid und Polylactid, so wie es typischerweise aus einem Rührkesselreaktor tritt (siehe Beispiel 2). Die Eintrittsviskosität beträgt 100 Pa·s. Der Rohrreaktor hat ein L/D-Verhältnis von 5 und die Gesamtverweilzeit beträgt 6 h. Der Rohrreaktor

wird in vier Segmente unterteilt, welches jedes mit einer Lochblende versehen ist.

Der Rohr- oder Strömungsreaktor 5 ist ein Rohr mit einem Doppelmantel, das mit Einbauten versehen ist. Die Verweilzeit im Reaktor beträgt sechs Stunden. Die Einbauten bestehen aus einer Kombination aus Lochscheiben, Verdrängungskörpern und konzentrischen Ringspalten. Geometrien und Einbaulagen wurden vorher mithilfe einer Strömungssimulation hinsichtlich eines gleichmäßigen Strömungsprofils optimiert.

Optimierungsparameter sind:

1. Bei den Lochblechen

-    Anzahl der Lochbleche im Reaktor,
-    Anzahl der Löcher pro Scheibe,
-    Lochdurchmesser und Lochdurchmesserverteilung,
-    Anordnung der Löcher auf der Scheibe,
-    Abstand zwischen Reaktorwand und Rand des Lochbleches.

2. Bei den Verdrängungsköpern

-    Anzahl der Körper pro Ebene,
-    Abstand zwischen den Körpern,
-    geometrische Form der Körper in Abhängigkeit von der Lage.

3. Bei den konzentrischen Ringspalten

-    Höhe,
-    Breite und
-    Anzahl der einzelnen Ringspalte.

Als Ergebnis der Strömungssimulation wird ein bezüglich eines gleichmäßigen Strömungsprofils optimierter Aufbau der Einbauten im Rohrreaktor erhalten. So ergibt sich für die erste Lochscheibe in Strömungsrichtung ein Anteil an freier Querschnittsfläche für das innere Drittel von 2 %, für das mittlere Drittel von 54 % und für das äußere Drittel von 47 %. Die Drittelung der Querschnittsfläche bezieht sich auf den Radius.

**Beispiel 2**

In einer kontinuierlichen Pilotanlage werden 2 kg/h gereinigtes Dilactid hergestellt. Das Dilactid hat eine mittlere Carboxylendruppenkonzentration von 10 mmol/kg (gemessen durch Säure - Base - Titration) und einen meso-Dilactid-Gehalt von 5% (gemessen durch HPLC). Das Dilactid wird mit Zinnoctoat als Katalysator mit einer Konzentration von 40 ppm Zinn versetzt und strömt in einen Rührkesselreaktor 2, der mit einem Ankerrührer ausgestattet ist und über einen Doppelmantel temperiert wird. Im Rührkesselreaktor findet die Ringöffnungspolymerisation von Dilactid zu Polylactid statt. Die Verweilzeit im Reaktor beträgt vier Stunden und die Temperatur der Schmelze 160°C. Das Produkt hat eine Schmelzeviskosität von 100 Pa·s bei einer Temperatur von 160 °C; der Umsatz beträgt 40%. Die Dilactid-Polylactid-Schmelze wird kontinuierlich entnommen und in den folgenden Rohrreaktor 5, dessen Einbauten gemäß den Ergebnissen aus Beispiel 1 aufgebaut sind, gepumpt.

Es wurden 20 Minuten lang im Abstand von einer Minute Proben am Auslauf des Rohrreaktors genommen und bzgl. Umsatz, Grenzviskosität und der Polydisperitätsindex analysiert. Die Ergebnisse sind in folgender Tabelle dargestellt.

| Zeit min | IV dl/g | Umsatz % | PDI |
|----------|---------|----------|------|
| 1        | 1,86    | 94,2     | 1,98 |
| 2        | 1,87    | 93,8     | 1,99 |

(fortgesetzt)

| Zeit min | IV dl/g | Umsatz % | PDI |
|---|---|---|---|
| 3 | 1,86 | 94,7 | 2,02 |
| 4 | 1,86 | 95,1 | 1,97 |
| 5 | 1,83 | 95,2 | 1,96 |
| 6 | 1,81 | 94,9 | 1,99 |
| 7 | 1,87 | 94,4 | 2,00 |
| 8 | 1,87 | 95,6 | 1,97 |
| 9 | 1,85 | 94,7 | 1,97 |
| 10 | 1,83 | 95,2 | 1,99 |
| 11 | 1,88 | 95,1 | 2,02 |
| 12 | 1,90 | 94,1 | 2,05 |
| 13 | 1,82 | 94,2 | 2,01 |
| 14 | 1,90 | 93,8 | 1,99 |
| 15 | 1,91 | 94,7 | 2,00 |
| 16 | 1,83 | 95,1 | 1,96 |
| 17 | 1,87 | 95,6 | 1,97 |
| 18 | 1,86 | 95,1 | 1,91 |
| 19 | 1,81 | 95,2 | 1,95 |
| 20 | 1,82 | 94,1 | 1,91 |

Die Werte für IV, Umsatz und PDI sind innerhalb der Messgenauigkeit konstant, was auf eine gleichmäßige Verweilzeitverteilung und somit auf ein gleichmäßiges Strömungsprofil schließen lässt.

Messmethoden

1. Monomergehalt:

Das Polymere wird in Chloroform gelöst und mit Cyclohexan ausgefällt und abfiltriert. Der Dilactidgehalt der Lösung wird mittels HPLC bestimmt und daraus der Umsatz berechnet.

2. IV

Das Polymere wird in Chloroform gelöst. Die Viskosität der Lösung wird in einem Ubbelohde-Viskosimeter bestimmt und in eine Grenzviskosität umgerechnet.

3. PDI

Das Zahlenmittel und Gewichtsmittel des Molekulargesichts des Polymeren werden mit GPC bestimmt. Die Eichung von GPC erfolgte gegen Polystyrol-Standards. Der PDI ist das Verhältnis aus Gewichts- und Zahlenmittel.

**Patentansprüche**

1. Verfahren zur Herstellung von Polylactid durch Ringöffnungspolymerisation, von Dilactid durch die Schritte

a) Einspeisen von Dilactid in mindestens einen Rührkessel und/oder einen Schlaufenreaktor als erste Polymerisationsstufe und Durchführen einer Vorpolymerisation, sowie
b) Überführen des erhaltenen Vorpolymerisats in mindestens einen Rohrreaktor als zweite Polymerisationsstufe, wobei der Rohrreaktor nicht mischende Einbauten aufweist, die das Geschwindigkeitsprofil des durchströmenden Fluids über den Querschnitt des Rohrreaktors vergleichmäßigen, und Durchführen einer Polymerisationsreaktion.

2. Verfahren nach vorhergehendem Anspruch, **dadurch gekennzeichnet, dass** die Vorpolymerisation im Schritt a) bis zu einem maximalen Umsatz des Dilactids von 5 bis 70 mol-%, bevorzugt 30 bis 60 mol-% durchgeführt wird.

3. Verfahren nach einem der Ansprüche 1 oder 2, **dadurch gekennzeichnet, dass** die Polymerisationsreaktion im Schritt b) bis zu einer maximalen Schmelzviskosität von 100 Pa·s bis 25.000 Pa·s, vozugsweise von 500 Pa·s bis 20.000 Pa·s durchgeführt wird.

4. Verfahren nach einem der Ansprüche 1 oder 3, **dadurch gekennzeichnet, dass** die Polymerisationsreaktion im Schritt b) bis zu einem Umsatz des Dilactids von mindestens 90 mol-%, bevorzugt mindestens 92,5 mol-%, besonders bevorzugt mindestens 95 mol-% durchgeführt wird.

5. Verfahren nach einem der Ansprüche 1 bis 4, dadurch gekennzeichet, dass im Anschluss man Schritt b) Stabilisatoren beigemischt werden.

6. Verfahren nach einem der Ansprüche 1 bis 5, **dadurch gekennzeichnet, dass** im Anschluss an Schritt b) eine Entmonomerisierung durch Extraktion mit einem Lösungsmittel und/oder durch Vakuumentgasung erfolgt.

7. Verfahren nach einem der Ansprüche 1 bis 6, **dadurch gekennzeichnet, dass** dem Dilactid vor Schritt a) und/oder vor Schritt b) Polymerisationskatalysatoren beigemischt werden.

8. Verfahren nach einem der Ansprüche 1 bis 7, dadurch gekenntzeichnet, dass im Anschluss an Schritt b) mindestens ein Additiv, ausgewählt aus der Gruppe bestehend aus Nukleirungsmitteln, Farbstoffen, Verstärkungsstoffen, Verarbeitungshilfsstoffen, Weichmachern, Modifizierungsmitteln, Füllstoffen und/oder Antioxidantien beigemischt wird.

9. Verfahren nach einem der Ansprüche 1 bis 8, **dadurch gekennzeichnet, dass** im Anschluss an Schritt b) mindestens ein weiteres Polymer, z.B. ein Polyester, zugeblendet wird.

10. Verfahren nach einem der Ansprüche 1 bis 9, **dadurch gekennzeichnet, dass** das Dilactid aus einer vorgeschalteten Reinigungsvorrichtung und/oder einer vorgeschalteten Kondensationsvorrichtung stammt.

11. Verfahren nach einem der Ansprüche 1 bis 10 zur Herstellung von Poly-L-Lactid, Poly-D-Lactid oder Poly-meso-Lactid.

12. Verfahren nach einem der Ansprüche 1 bis 11, **dadurch gekennzeichnet, dass** Einbauten eingesetzt werden, die aus der Gruppe bestehend aus perforierten Lochscheiben, Verdrängungskörpexn, konzentrischen Ringspalte und/oder röhrenförmigen Elementen, ausgewählt sind.

13. Verfahren nach vorhergehendem Anspruch, **dadurch gekennzeichnet, dass** die konzentrischen Ringspalte, Verdrängungskörper und/oder röhrenförmigen Elemente in Abhängigkeit ihrer radialen Anordnung bezüglich des Querschnittes des Rohreaktors unterschiedliche lang in axialer Richtung des Rohrreaktors ausgebildet sind.

14. Verfahren nach einem der beiden vorhergehenden Ansprüche, **dadurch gekennzeichnet, dass** durch die Einbauten gewährleistet ist, dass der Quotient aus minimaler Verweilzeit des den Rohrreaktor am schnellsten durchströmenden Teil des Fluids und der mittleren Verweilzeit des gesamten Fluids im Rohrreaktor mindestens 0,5 beträgt.

15. Verfahren nach einem der vorhergehenden Ansprüche 12 bis 14, **dadurch gekennzeichnet, dass** die Einbauten des Rohrreaktors einen maximalen Variationskoeffizient $V$ von 0,8, bevorzugt von 0,5, erzeugen, wobei $V$ gemäß folgender Gleichung definiert ist,

$$V = \frac{S}{c_S}$$

S die Stichprobenvarianz gemäß

$$S = \sqrt{\frac{1}{n-1} \cdot \sum_{i=1}^{n}(c_i - c_S)^2}$$

darstellt und

$c_i$ die Konzentration einer Indikatorsubstanz einer an einer zufällig gewählten Stelle $i$ der Austrittsfläche des Rohrreaktors entnommenen Stichprobe bedeutet, wobei die Indikatorsubstanz an einer zufällig gewählten Stelle der Eintrittsfläche des Rohrreaktors aufgegebenen wird, $c_s$ das arithmetische Mittel der Konzentrationen der entnommenen Stichproben gemäß

$$c_S = \frac{1}{n}\sum_{i=1}^{n} c_i$$

darstellt, sowie

$n$ die Anzahl der Stichproben bedeutet.

**Claims**

1. Method for the production of polylactide by means of ring-opening polymerisation of dilactide by means of the steps

    a) feeding dilactide into at least one stirred tank and/or one recycle reactor as first polymerisation step and implementing a prepolymerisation, and also
    b) transferring the obtained prepolymer into at least one tubular reactor as second polymerisation step, the tubular reactor having non-mixing baffles which even out the speed profile of the through-flowing fluid across the cross-section of the tubular reactor, and implementing a polymerisation reaction.

2. Method according to the preceding claim, **characterised in that** the prepolymerisation in step a) is implemented up to a maximum conversion of the dilactide of 5 to 70% by mol, preferably 30 to 60% by mol.

3. Method according to one of the claims 1 or 2, **characterised in that** the polymerisation reaction in step b) is implemented up to a maximum melt viscosity of 100 Pa·s to 25,000 Pa·s, preferably of 500 Pa·s to 20,000 Pa·s.

4. Method according to one of the claims 1 or 3, **characterised in that** the polymerisation reaction in step b) is implemented up to a conversion of the dilactide of at least 90% by mol, preferably at least 92.5% by mol, particularly preferred at least 95% by mol.

5. Method according to one of the claims 1 to 4, **characterised in that**, subsequent to step b), stabilisers are admixed.

6. Method according to one of the claims 1 to 5, **characterised in that**, subsequent to step b), a demonomerisation is effected by extraction with a solvent and/or by vacuum degassing.

7. Method according to one of the claims 1 to 6, **characterised in that** polymerisation catalysts are admixed with the dilactide prior to step a) and/or prior to step b).

8. Method according to one of the claims 1 to 7, **characterised in that**, subsequent to step b), at least one additive, selected from the group consisting of nucleation agents, colourants, reinforcing materials, processing aids, plasticisers, modification agents, fillers and/or antioxidants, is admixed.

9. Method according to one of the claims 1 to 8, **characterised in that**, subsequent to step b), at least one further polymer, e.g. a polyester, is blended in.

10. Method according to one of the claims 1 to 9, **characterised in that** the dilactide originates from a preceding purification device and/or a preceding condensation device.

11. Method according to one of the claims 1 to 10 for the production of poly-*L*-lactide, poly-D-lactide or poly-meso-lactide.

12. Method according to one of the claims 1 to 11, **characterised in that** baffles are used which are selected from the group consisting of perforated discs, displacement bodies, concentric annular gaps and/or tubular elements.

13. Method according to the preceding claim, **characterised in that** the concentric annular gaps, displacement bodies and/or tubular elements are configured to be of different length in the axial direction of the tubular reactor as a function of the radial arrangement thereof relative to the cross-section of the tubular reactor.

14. Method according to one of the two preceding claims, **characterised in that**, by means of the baffles, it is ensured that the quotient of minimum dwell time of the part of the fluid flowing fastest through the tubular reactor and of the average dwell time of the entire fluid in the tubular reactor is at least 0.5.

15. Method according to one of the preceding claims 12 to 14, **characterised in that** the baffles of the tubular reactor produce a maximum variation coefficient $V$ of 0.8, preferably of 0.5, $V$ being defined according to the following equation

$$V = \frac{S}{c_s}$$

S representing the random sample variance according to

$$S = \sqrt{\frac{1}{n-1} \cdot \sum_{i=1}^{n} (c_i - c_s)^2}$$

and
$c_i$ meaning the concentration of an indicator substance of a random sample taken at a randomly selected position $i$ of the exit area of the tubular reactor, the indicator substance being supplied at a randomly selected position of the entry area of the tubular reactor,
$c_s$ representing the arithmetic mean of the concentrations of the samples taken according to

$$c_s = \frac{1}{n} \sum_{i=1}^{n} c_i$$

and also
$n$ meaning the number of random samples.

**Revendications**

1. Procédé de fabrication de polylactide au moyen d'une polymérisation par ouverture de cycle de dilactide, comprenant les étapes suivantes :

   a) introduction de dilactide dans au moins une cuve d'agitation et/ou un réacteur à boucle pour un premier niveau de polymérisation, et réalisation d'une prépolymérisation, ainsi que
   b) transfert du prépolymère obtenu dans au moins un réacteur tubulaire pour un deuxième niveau de polymérisation, dans lequel le réacteur tubulaire présente des chicanes non mélangeuses qui homogénéisent le profil de vitesse du fluide circulant sur la section du réacteur tubulaire, et réalisation d'une réaction de polymérisation.

2. Procédé selon la revendication précédente, **caractérisé en ce que** la prépolymérisation de l'étape a) est réalisée jusqu'à atteindre un niveau maximal de dilactide de 5 à 70 % en moles, de préférence de 30 à 60 % en moles.

3. Procédé selon la revendication 1 ou 2, **caractérisé en ce que** la réaction de polymérisation de l'étape b) est réalisée jusqu'à atteindre une viscosité de fusion maximale de 100 Pa·s à 25 000 Pa·s, de préférence de 500 Pa·s à 20 000 Pa·s.

4. Procédé selon l'une des revendications 1 ou 3, **caractérisé en ce que** la réaction de polymérisation de l'étape b) est réalisée jusqu'à atteindre un niveau de dilactide d'au moins 90 % en moles, de préférence au moins 92,5 % en moles, de manière particulièrement préférée d'au moins 95 % en moles.

**5.** Procédé selon l'une des revendications 1 à 4, **caractérisé en ce que** des stabilisants sont ajoutés en mélange à la suite de l'étape b).

**6.** Procédé selon l'une des revendications 1 à 5, **caractérisé en ce que** l'étape b) est suivie d'une démonomérisation par extraction au moyen d'un solvant et/ou par dégazage sous vide.

**7.** Procédé selon l'une des revendications 1 à 6, **caractérisé en ce que** des catalyseurs de polymérisation sont ajoutés en mélange au dilactide avant l'étape a) et/ou avant l'étape b).

**8.** Procédé selon l'une des revendications 1 à 7, **caractérisé en ce qu'**au moins un additif, choisi dans le groupe consistant en des agents de nucléation, des colorants, des matières de renfort, des adjuvants, des plastifiants, des modificateurs, des charges et/ou des antioxydants, est ajouté à la suite de l'étape b).

**9.** Procédé selon l'une des revendications 1 à 8, **caractérisé en ce qu'**au moins un autre polymère, par exemple un polyester, est ajouté au mélange à la suite de l'étape b).

**10.** Procédé selon l'une des revendications 1 à 9, **caractérisé en ce que** le dilactide provient d'un dispositif de purification en amont et/ou d'un dispositif de condensation en amont.

**11.** Procédé selon l'une des revendications 1 à 10 pour la fabrication de poly-L-lactide, de poly-D-lactide ou de poly (méso-lactide).

**12.** Procédé selon l'une des revendications 1 à 11, **caractérisé en ce que** des chicanes sont installées qui sont choisies dans le groupe consistant en des disques perforés, des corps de déplacement, des interstices annulaires concentriques et/ou des éléments de forme tubulaire.

**13.** Procédé selon la revendication précédente, **caractérisé en ce que** les interstices annulaires concentriques, les corps de déplacement et/ou les éléments de forme tubulaire sont conçus avec des longueurs différentes, en fonction de leur agencement radial par rapport à la section transversale du réacteur tubulaire, dans la direction axiale du réacteur tubulaire.

**14.** Procédé selon l'une des revendications précédentes, **caractérisé en ce que** grâce aux chicanes est garanti un quotient du temps de rétention minimum de la partie du fluide traversant le plus vite le réacteur tubulaire sur le temps de rétention moyen de la totalité du fluide présent dans le réacteur tubulaire au moins égal à 0,5.

**15.** Procédé selon l'une des revendications 12 à 14 précédentes, **caractérisé en ce que** les chicanes du réacteur tubulaire génèrent un coefficient de variation $V$ maximal de 0,8, de préférence de 0,5, $V$ étant défini pat l'équation suivante :

$$V = \frac{S}{c_s}$$

où

$S$ représente la variance de l'échantillon, donnée par

$$S = \sqrt{\frac{1}{n-1}\sum_{i=1}^{n}(c_i - c_s)^2}$$

$c_i$ signifie la concentration d'une substance indicatrice dans un échantillon prélevé à un emplacement $i$ choisi au hasard de la surface de sortie du réacteur tubulaire, ladite substance indicatrice étant introduite à un emplacement choisi au hasard de la surface d'entrée du réacteur tubulaire,
$c_s$ représente la moyenne arithmétique des concentrations des échantillons prélevés, donnée par

$$c_s = \frac{1}{n} \sum_{i=1}^{n} c_i$$

et

$n$ signifie le nombre des échantillons.

$$c_s = \frac{1}{n} \sum_{i=1}^{n} c_i$$

**Fig. 1**

Fig. 2

EP 2 188 047 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5484882 A